# EUROPÄISCHE PATENTSCHRIFT

(11) **EP 1 890 909 B1**
(45) Veröffentlichungstag und Bekanntmachung des Hinweises auf die Patenterteilung: **10.03.2010**
(21) Anmeldenummer: 06754418.9
(22) Anmeldetag: 16.06.2006
(51) Int. Cl.: B60P 1/44

(54) **LADEBORDWAND**
TAILGATE
PAROI D'UN BORD DE CHARGEMENT

(30) Priorität: 16.06.2005 DE 102005028009; 22.07.2005 DE 102005034954; 05.01.2006 DE 102006000994
(43) Veröffentlichungstag der Anmeldung: 27.02.2008
(73) Patentinhaber: Peter Maier Leichtbau GmbH, 78224 Singen (DE)
(72) Erfinder: MAIER, Peter, 78224 Singen (DE); SEUSSLER, Jürgen, 78224 Singen (DE)
(74) Vertreter: Weiss, Peter
(86) Internationale Anmeldenummer: PCT/EP2006/005818
(87) Internationale Veröffentlichungsnummer: WO 2006/133964

(56) Entgegenhaltungen:
- EP-A- 1 541 412
- EP-A1- 1 445 145

## Beschreibung

Die Erfindung betrifft eine Ladebordwand, insbesondere für ein Fahrzeug, mit einer Plattform, welche über zumindest einen Tragarm mit einer Hub- /Senkeinrichtung verbunden ist, wobei die Plattform mit dem Tragarm eine Drehachse und der Tragarm mit der Hub- /Senkeinrichtung eine Schwenkachse ausbildet.

### Stand der Technik

Ladebordwände sind in vielfältiger Form und Ausführung bekannt und auf dem Markt. Nur beispielsweise wird auf die EP 1 541 412 A1 verwiesen. Ihr Antrieb erfolgt ausschliesslich hydraulisch, wobei die Hydraulik der Ladebordwand meist mit der Hydraulik des Fahrzeuges verbunden ist. Hierzu sind eine Vielzahl von Schläuchen vorgesehen, die den Nachteil haben, dass sowohl sie als auch der entsprechende Hydraulikzylinder an der Rückseite des Fahrzeuges in exponierter Lage angebracht sind. Vor allem beim Rückwärtsfahren sind sowohl die Hydraulikschläuche als auch die empfindlichen Kolbenstangen häufig mechanischen Beschädigungen ausgesetzt, was nicht nur zu Funktionsstörungen, sondern auch zu Leckagen führt, sodass Hydrauliköl ausläuft und Umweltschäden entstehen. Verschärft wird dies noch vor allem im Winter durch Minustemperaturen und Streusalzbelastung.

Hinzu kommt, dass bei einer Beschädigung der Hydraulik sich die Ladebordwand nicht mehr schliessen lässt und beispielsweise der Inhalt eines Frachtraumes, der durch die Ladebordwand verschlossen wird, Umwelteinflüssen ausgesetzt ist. Handelt es sich bei dem Frachtraum um einen Kühlcontainer, so kann keine Kühlung mehr stattfinden.

Ein weiterer Nachteil bei herkömmlichen Ladebordwänden ist das Parallelogramm, mit dem die Bewegungen aufeinander abgestimmt sind. Bei steilen Anbauwinkeln verringert sich der Parallelogrammabstand, wodurch die Kräfte, die auf die Gelenke wirken, ansteigen. Es können deshalb nur Schwenkbereiche und Hubbereiche von ca. 90° durchgeführt werden.

Des weiteren besteht ein Nachteil bei herkömmlichen Ladebordwänden darin, dass im Falle einer Störung, beispielsweise bei der Hydraulik od. dgl. kein Nachweis darüber erbracht werden kann, ob diese Störung betriebsbedingt, d.h., aufgrund von häufigem Gebrauch oder werksbedingt verursacht wurde. D.h., dass z. B. Regressansprüche schwer durchzusetzen sind, weil beispielsweise nicht nachgewiesen werden kann, wie viele Ladezyklen eine derartige Ladebordwand bereits durchlaufen hat. Es lässt sich daher nicht feststellen, ob die Störung aufgrund eines Fehlers der Ladebordwand selber oder aber aufgrund der Handhabung verursacht wurde.

Ferner muss in der Regel eine spezielle Werkstatt angefahren werden, um die Störung im System zu beseitigen, da der Benutzer selbst vor Ort nicht feststellen kann, wo der Schaden liegt bzw. diesen auch nicht beheben kann.

Auch aus der EP 1 445 145 A1 ist ein Ladebordwandsystem mit wenigstens einem Klappaktuator und einem Hubaktuator bekannt. Hier wird ein Elektromotor zum Antrieb einer Hydraulikpumpe eingesetzt, die wiederum entsprechende Aktuatoreinrichtungen zum Bewegen einer Ladebordwand um eine Drehachse und eine Schwenkachse antreibt.

Des weiteren offenbart die EP 1 541 412 A1 ebenfalls zwei im wesentlichen parallelogrammförmig, im wesentlichen parallel voneinander beabstandete Tragwerke, bei denen allerdings die bekannten hydraulischen Kippaktuatoren und/oder Hubaktuatoren durch eine elektromotorisch betriebene Einrichtung ersetzt sind. Beispielsweise kann dies eine elektromotorisch angetriebene Gewindespindel sein.

### Aufgabe der Erfindung

Aufgabe der vorliegenden Erfindung ist es, eine Ladebordwand der o. g. Art zu schaffen, welche einen wesentlich verbesserten Antrieb aufweist. Weiterhin soll es möglich sein, die Handhabung und den Betrieb einer Ladebordwand zu überwachen, um Störungen im System möglichst gleich zu entdecken und vor Ort beheben zu können. Ferner soll es möglich sein, die Ladebordwand auch bei Störungen im System bzw. Ausfällen der Elektrik weiterhin betreiben zu können.

### Lösung der Aufgabe

Zur Lösung der Aufgabe führt, das zum Antrieb der ladebordwand ein elektrischer Motor (3,13) auf der Drehachse und/oder der Schwenkachse angeordnet ist.

Dieser Motor hat den Vorteil, dass die oben beschriebenen Nachteile der Hydraulik völlig entfallen. Es gibt kein Hydrauliköl, keine Hydraulikschläuche, die undicht werden können und keine Hydraulikzylinder, deren Kolbenstangen in exponierter Lage erheblich gefährdet sind.

Als Motor bietet sich vor allem ein elektrisch betriebener Servomotor bzw. Stellmotor an, mit dem auch begrenzte Drehbewegungen in beiden Drehrichtungen durchgeführt werden können.

Da natürlich auf den Motor erhebliche Kräfte einwirken, dürfte es sich als ratsam erweisen, für die Übertragung der motorischen Kraft zumindest ein Getriebe vorzusehen. Wie das Getriebe ausgelegt ist, kann für die jeweilige Plattform und den jeweiligen Gebrauch der Ladebordwand bestimmt werden.

Als Sicherung beispielsweise bei einem Ausfall des Motors können dem Motor und/oder dem Getriebe eine oder mehrere Bremsen zugeordnet sein, die beispielsweise bei Überschreiten einer bestimmten Drehgeschwindigkeit schliessen. Denkbar ist auch, dass das Getriebe selbsthemmend ausgebildet ist. Sofern jedoch das Getriebe nicht selbsthemmend ausgebildet ist, kann ein Absenken der Ladebordwand ausgenutzt werden, um beispielsweise eine Batterie zu laden. In diesem Fall würde der Motor für die Schwenkachse umfunktioniert in einen Generator.

Die Anordnung der Motoren mit den Getrieben hat ferner den Vorteil, dass bei einem Ausfall der Elektrik die Plattform mit einer Kurbel od. dgl. über ein Kegelzahnrad manuell von aussen betätigt werden kann, so dass es dennoch zu einem Drehen der Plattform bzw. zu einem Absenken oder Anheben der gesamten Ladebordwand kommt. Auf diese Weise kann verhindert werden, dass beispielsweise bei einem Transport von Kühlgütern im Frachtraum dieser nicht geschlossen werden kann und somit die Kühlgüter verderben. Ein derartiges Kegelzahnrad kann beispielsweise an einer Verbindung zwischen Motor und Getriebe angeordnet sein. Weitere Möglichkeiten der manuellen Betätigung der Getriebe sind denkbar und sollen von der vorliegenden Erfindung umfasst sein.

Auch steuerungstechnisch hat das Vorsehen der Motoren erhebliche Vorteile. Über entsprechende Sensoren und Endschalter kann die Ladebordwand und deren Funktion auf einfache Weise abgefragt und gesteuert werden.

Weiterhin kann dem Motor bzw. den Getrieben eine Steuerung zugeordnet werden, für welche separat Schutz begehrt wird. Die Steuerung ist bevorzugt im Bereich eines Bedienpaneels für die Plattform angeordnet. Die Steuerung ist bevorzugt mit dem Motor verbunden, um den Motorstrom zu ermitteln. Der Motorstrom gilt beispielsweise als Mass für die Last, die gehoben wird. So kann vorgesehen sein, dass ein Heben der Plattform nicht möglich ist, wenn diese zu stark beladen ist. Am Fahrzeug, wie beispielsweise im Fahrerhaus oder aber in der Nähe der Plattform selbst, kann in solchen Fällen eine Lampe od. dgl. aufleuchten, die dem Nutzer erkennbar signalisiert, dass die Plattform eine zu grosse Last trägt. Erst, wenn die zulässige Last für die Plattform wieder erreicht ist, läuft der Motor wieder und die Plattform kann gehoben werden.

Gleichfalls lässt sich mit der Steuerung feststellen, wie oft die Ladebordwand bzw. die Plattform bereits in Betrieb genommen wurde. Das bedeutet, dass der Steuerungselektronik in der Regel eine Leistungselektronik zugeordnet wird.

Es ist jedoch auch denkbar, die Steuerung direkt der Drehachse und/oder der Schwenkachse zuzuordnen bzw. austauschbar an Ausgangs- und Getriebewellen anzuordnen.

Neben der Steuerung zur Messung des Motorstroms kann auch eine statische Überlastungserkennung vorgesehen sein. Diese ist bevorzugt in der Form von Dehnungsmessstreifen an der einen oder an beiden Achsen vorgesehen. Somit kann gewährleistet werden, dass eine Überlastung der Plattform auch dann erkannt und signalisiert werden kann, wenn der Motor nicht läuft und sich die Plattform noch nicht bewegt hat.

Der Motor für die Schwenkachse und/oder der Motor für die Drehachse sollen bevorzugt vollständig gekapselt sein. Hierdurch sind der Motor und gegebenenfalls auch das Getriebe nicht nur geschützt, sondern auch sämtliche Elektroleitungen befinden sich innerhalb der Gehäuse und sind geschützt. Es genügt beispielsweise eine einzige Zuleitung von der Elektrik des Fahrzeuges.

Zum Schwenken der Plattform sind die oben erwähnten Tragarme vorgesehen. Dabei genügen zwei Tragarme, wobei jeweils ein Tragarm an einer Seite des Gehäuses angesetzt ist. Dabei sind sie so mit dem Gehäuse verbunden, dass sie um die Schwenkachse in einem begrenzten Drehwinkel herumdrehen. Beispielsweise sitzt jeder Tragarm mit einem Ringkragen in dem Gehäuse und ist dort entsprechend gelagert. Der Ringkragen hat den Vorteil, dass ein Teil seiner Innenfläche mit Zähnen bzw. einem schalenförmigen Zahnkranz belegt sein kann, wobei diese Schalenzahnung mit einem Ritzel zusammenwirken, welches auf der Getriebewelle aufgesetzt ist.

Somit besteht die Hub- /Senkeinrichtung aus einem Motor und zwei Getrieben, die in einem Gehäuse sitzen und zwei Tragarme um die Schwenkachse drehen.

Der Motor für die Drehachse sitzt wiederum in einem Rohr, welches sich zwischen den Tragarmen befindet und dort mit den Tragarmen fest verbunden ist. Auch hier befinden sich bevorzugt beidseitig des Motors in dem Rohr entsprechende Getriebe und sind mit dem Motor verbunden.

Die Plattform dreht um das Rohr, wobei die Ausgangswellen der Getriebe bevorzugt drehfest in entsprechende Drehelemente an der Plattform eingreifen. Beispielsweise kann die Plattform die beiden Tragarme mit jeweils einem Rohrabschnitt umgreifen, wobei diese Rohrabschnitte dann wiederum Teil der Drehachse sind. In diesen Rohrabschnitt greift jeweils eine Ausgangswelle des Getriebes ein und ist dort drehfest festgelegt.

Das Rohr bzw. die Rohrabschnitte und/oder das Gehäuse können dabei fest oder wiederlösbar mit der Plattform verbunden sein. So können das Rohr bzw. die Rohrabschnitte und/oder das Gehäuse mit der Plattform verschweisst oder aber mittels anderer Befestigungsmittel, wie beispielsweise Schrauben, Haken, hakenartiger Elemente od. dgl. mit der Plattform verbunden sein.

Weiterhin soll vorgesehen sein, die Tragarme lediglich auf die Enden der Ausgangswelle bzw. der Getriebewelle nahezu drehfest aufzustecken und so die Drehachse mit der Schwenkachse zu verbinden. Die Anordnung der Tragarme kann beispielsweise über eine Nut- und Federverbindung erfolgen. Jedwede andere Möglichkeit der Anordnung der Tragarme ist jedoch denkbar und soll von der vorliegenden Erfindung umfasst sein. Bei einem Austausch des Rohres bzw. einzelner Rohrabschnitte oder auch des Gehäuses muss lediglich der eine Tragarm oder beide entfernt werden, anschliessend können Elemente in dem Rohr, den Rohrabschnitten und/oder dem Gehäuse entfernt und ausgetauscht werden. Danach werden der oder die Tragarme einfach wieder auf die Wellen aufgesteckt.

Weiterhin ist denkbar, die einzelnen Motoren und ihre zugehörigen Getriebe auf unterschiedlichen, d.h. beispielsweise auf zwei oder mehr Achsen anzuordnen. Dies vereinfacht die Anordnung zwar nicht, soll aber dennoch von der vorliegenden Erfindung umfasst sein.

Die Anordnung von sowohl einem Motor auf der Drehachse als auch einem Motor auf der Schwenkachse erlaubt es nun, auf das Parallelogramm zu verzichten, wobei von der Erfindung selbstverständlich auch das Belassen dieses Parallelogramms umfasst wird. Da der Schwenkbereich und der Drehbereich durch die Motoren nicht auf ca. 90° beschränkt ist, können die elektromotorischen Antriebe auch für weitere Funktionen benutzt werden. Hierzu gehört beispielsweise die Erzeugung einer Faltbewegung bei unterfaltbaren Ladebordwänden.

Es bietet sich aber auch die Möglichkeit an, die Tragarme teleskopartig auszubilden, wobei zwei Profile ineinander verschiebbar sind. Dabei genügt es, einem Profil eine Spindel mit einem Spindelantrieb zuzuordnen, sodass dieses eine Profil gegenüber dem anderen Profil ausgefahren werden kann.

Des weiteren kann im System ein Neigungssensor vorgesehen sein, welcher während dem Betrieb der Ladebordwand bzw. der Plattform gewährleistet, dass diese stets eine waagerechte Position einhält. Dies ist insbesondere bei Strassenneigungen von Vorteil, wo verhindert werden soll, dass auf der Plattform befindliche Ladung aufgrund der Neigung der Strasse von der Plattform herunterrollt.

Die erfindungsgemässe Ladebordwand ist sehr vielfältig einsetzbar. Sie wird insbesondere im Zusammenhang mit Fahrzeugen benutzt, wobei der Begriff Fahrzeug nicht einschränkend ausgelegt werden soll. Eine derartige Ladebordwand kann auch an einer Rampe einer Lagerhalle angeordnet werden.

Durch die Art der Anordnung der einzelnen Bestandteile auf der Achse ist die Möglichkeit gegeben, die einzelnen Bestandteile nach Art eines Stecksystems zusammenzustecken. Auf diese Art und Weise wird die Austauschbarkeit der einzelnen Bestandteile ermöglicht und erleichtert.

### Figurenbeschreibung

Weitere Vorteile, Merkmale und Einzelheiten der Erfindung ergeben sich aus den nachfolgenden Beschreibung bevorzugter Ausführungsbeispiele sowie anhand der Zeichnung; diese zeigt in
Figur 1 eine Draufsicht auf eine erfindungsgemässe Ladebordwand;
Figur 2 eine teilweise dargestellte, vergrösserte Seitenansicht der Ladebordwand gemäss Figur 1;
Figur 3 einen schematisch dargestellten Bewegungsablauf der efindungsgemässen Ladebordwand gemäss Figur 1 an einem LKW.

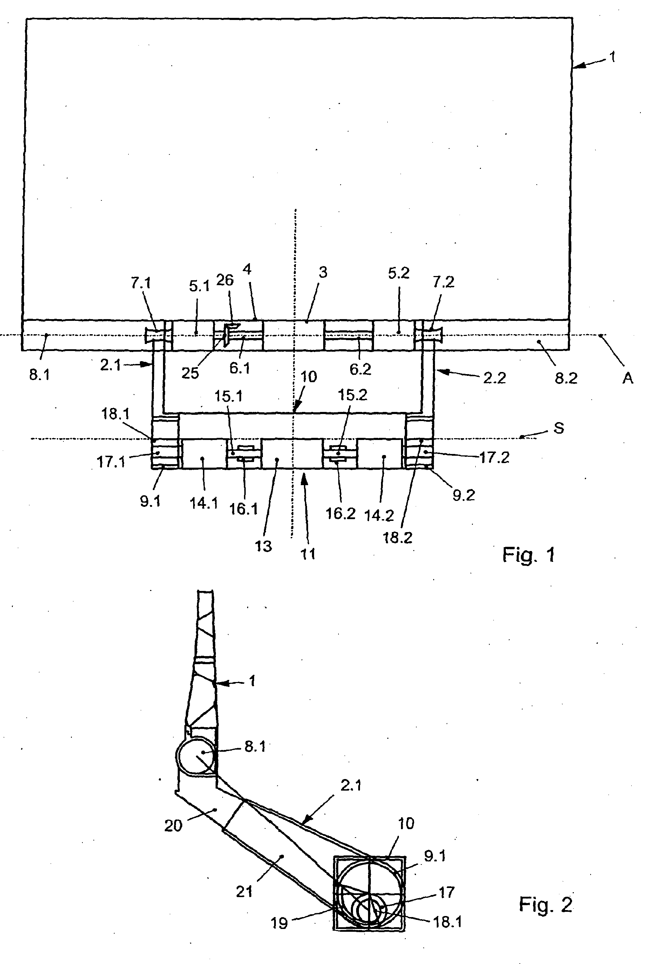

Eine erfindungsgemässe Ladebordwand weist gemäss den Figuren 1 und 2 eine Plattform 1 auf, welche beispielsweise aus einer Mehrzahl von stranggepressten Aluminiumprofile besteht. Diese Plattform 1 ist mit zwei Tragarmen 2.1 und 2.2 verbunden, wobei die Plattform 1 mit den Tragarmen 2 eine Drehachse A ausbildet. Die Plattform 1 ist gegenüber den Tragarmen 2.1 und 2.2 um diese Drehachse A drehbar, wobei die Drehbewegung durch einen Motor 3 bewirkt wird, der in einem Rohr 4 sitzt. Dieses Rohr 4 befindet sich zwischen den beiden Tragarmen 2.1 und 2.2 und ist mit den Tragarmen 2.1 und 2.2 fest verbunden, wobei eine lösbare Verbindung ebenfalls denkbar ist, insbesondere dann, wenn, wie weiter unten beschrieben ist, auch das Rohr 4 lösbar mit der Plattform 1 verbunden ist.

Des weiteren befinden sich in diesem Rohr 4 zwei Getriebe 5.1 und 5.2, die eine entsprechende Verbindung 6.1 und 6.2 mit dem Motor 3 aufweisen. Jedes Getriebe 5.1 und 5.2 besitzt eine Ausgangswelle 7.1 und 7.2, welche eine drehfeste Verbindung mit der Plattform 1 eingehen. Hierzu besitzt die Plattform 1 beispielsweise beidseitig Rohrabschnitte 8. 1 und 8.2, die zur Ausgangswelle 7.1 und 7.2 jeweils eine Ausnehmung mit zumindest einer achsparallelen Nut aufweisen, in welche die Ausgangswelle 7.1 bzw. 7.2 mit einem entsprechenden Vorsprung eingreift. Auf diese Weise kann beim Betrieb des Motors 3 die Plattform 1 um die Drehachse A gedreht werden.

Das Rohr 4 bzw. die Rohrabschnitte 8.1 und 8.2 sind mit der Plattform 1 bevorzugt mittels nicht näher gezeigter Befestigungsmittel, wie beispielsweise Schrauben, Haken, hakenartiger Elemente od. dgl., lösbar verbunden. Auf diese Weise ist ein Entfernen des Rohres 4 und/oder der Rohrabschnitte 8.1 bzw. 8.2 von der Plattform 1 möglich. Es müssen lediglich die jeweiligen Befestigungsmittel gelöst werden. Eine feste Verbindung zwischen dem Rohr 4 und/oder den Rohrabschnitten 8.1 bzw. 8.2 und der Plattform 1 ist jedoch ebenfalls möglich.

Zumindest auf einer der Verbindungen 6.1 bzw. 6.2 kann ein Kegelzahnrad 25 vorgesehen sein, welches mit einem Antriebsrad 26 in Eingriff steht, dass von einer nicht näher gezeigten Handkurbel über zumindest zwei nicht näher gezeigte, sich etwa gegenüberliegende Bohrungen in dem Rohr 4 erreichbar ist. Auf diese Art und Weise lässt sich, beispielsweise bei einem Ausfall der Elektrik, mittels der Handkurbel das Kegelzahnrad 25 bewegen, wodurch die Plattform 1 auch ohne Hilfe des Motors 3 oder der Getriebe 5.1 und 5.2, d.h. manuell geschwenkt werden kann.

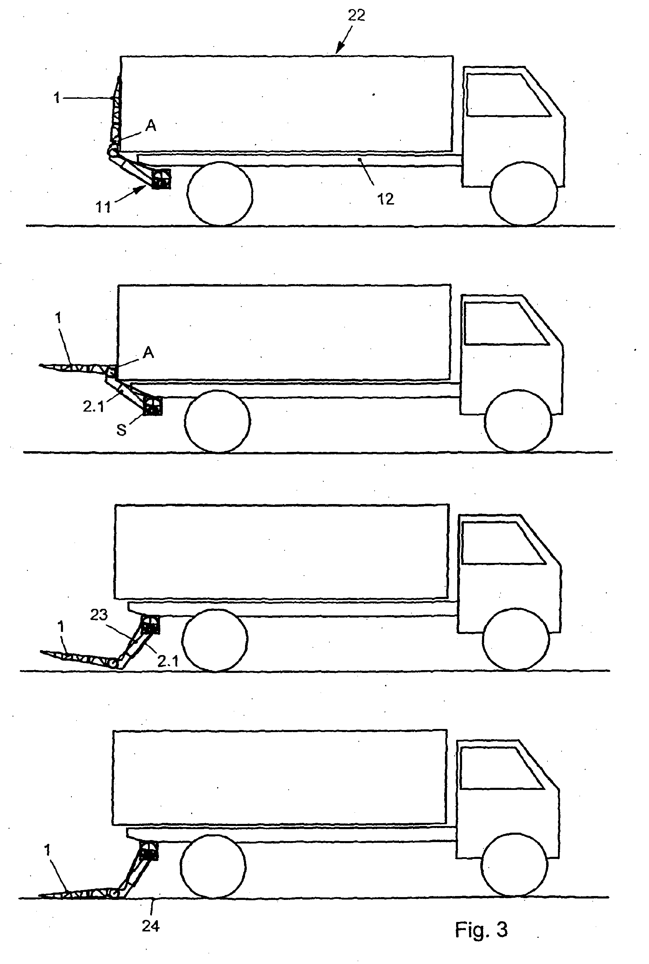

Jeder Tragarm 2.1 bzw. 2.2 besitzt einen Ringkragen 9.1 bzw. 9.2, mit dem er in ein Gehäuse 10 eingreift, welches Teil einer Hub- /Senkeinrichtung 11 ist. Diese Hub- /Senkeinrichtung 11 kann, wie in Figur 3 gezeigt, beispielsweise unter dem Boden 12 einer LKW-Ladefläche festgelegt werden. Die Ringkragen 9.1 und 9.2 drehen um eine Schwenkachse S, welche durch das Gehäuse 10 verläuft.

Das Gehäuse 10 kann mit der Plattform 1 ebenfalls bevorzugt mittels nicht näher gezeigter Befestigungsmittel, wie beispielsweise Schrauben, Haken, hakenartiger Elemente od. dgl., lösbar verbunden sein. Auf diese Weise ist ein Entfernen des Gehäuses 10 oder Abschnitten davon von der Plattform 1 möglich. Es müssen lediglich die jeweiligen Befestigungsmittel gelöst werden. Eine feste Verbindung zwischen dem Gehäuse 10 und der Plattform 1 ist jedoch ebenfalls möglich.

Die Drehbewegung der Tragarme 2.1 und 2.2 um die Schwenkachse S wird wiederum von einem Motor 13 bewirkt, der sich innerhalb des Gehäuses 10 befindet. Der Motor 13 sitzt etwa in der Mitte zwischen zwei Getrieben 14.1 und 14.2 und gegebenenfalls unterhalb der Schwenkachse S. Er weist entsprechende Verbindungen 15.1 und 15.2 mit den Getrieben 14.1 und 14.2 auf, wobei diesen Verbindungen 15.1 und 15. 2 nur schematisch dargestellte Bremsen 16.1 und 16.2 zugeordnet sein können. Den Verbindungen 15.1 und 15.2 kann ebenfalls ein manuell betätigbarer Kegelzahnradantrieb, ähnlich dem Kegelzahnradantrieb 25/26 zugeordnet sein, wie es bereits oben im Zusammenhang mit den Verbindungen 6.1 und 6.2 beschrieben wurde.

Auf jeder Getriebewelle 17.1 und 17.2, die in den jeweiligen Ringkragen 9.1 bzw. 9.2 eingreift, sitzt ein Ritzel 18.1 bzw. 18.2, welches eine Schalenzahnung 19 in dem Ringkragen 9.1 bzw. 9.2 abrollen kann.

Die Tragarme 2.1 und 2.2 können ferner beispielsweise mittels einer nicht näher gezeigten Nut- und Federverbindung auf die jeweiligen Enden der Ausgangswelle 7.1 bzw. 7.2 bzw. der Getriebewelle 17.1 bzw. 17.2 aufgesetzt sein. Auf diese Art und Weise können die Tragarme 2.1 und 2.2 gegebenenfalls leicht von der Ausgangswelle 7.1 bzw. 7.2 bzw. der Getriebewelle 17.1 bzw. 17.2 gelöst werden.

Jeder Tragarm 2.1 bzw. 2.2 besteht aus zwei Profilen 20 und 21, die ineinander verschiebbar sind. Dabei kann beispielsweise dem Profil 20 eine nicht näher gezeigte Spindel zugeordnet sein, die, sofern sie beispielsweise elektromotorisch betätigt wird, ein Ausfahren des Profils 20 aus dem Profil 21 bewirkt.

Die Funktionsweise der vorliegenden Erfindung wird anhand der Figur 3 näher erläutert:

In Figur 3, oben, ist die Ladebordwand in Schliesslage erkennbar. Dabei überdeckt die Plattform 1 zumindest einen Teil einer Ladeöffnung des LKW 22. Die Hub- /Senkeinrichtung 11 sitzt unter dem Boden 12 versteckt.

Soll nun ein Be- oder Entladevorgang durchgeführt werden, wird zuerst der Motor 3 in Bewegung gesetzt, indem ein nicht näher gezeigte Bedienpanel am Fahrzeug betätigt wird. Hierdurch wird die Plattform 1 um die Drehachse A in eine waagerechte Lage gedreht. Da die Drehachse A direkt an die Ladefläche des LKW anschliesst, kann jetzt beispielsweise ein Ladegut von der Ladepritsche des LKW auf die Plattform 1 gefahren werden.

Als Nächstes erfolgt ein Schwenken der Tragarme 2.1 bzw. 2.2 um die Schwenkachse S, was durch den Motor 13 bewirkt wird. Dabei könnte zwischen der Schwenkachse S und der Drehachse A eine mechanische nur schematisch angedeutete Verbindung 23 angeordnet werden, welche bewirkt, dass die Plattform 1 in waagerechter Lage verbleibt. Bevorzugt sind jedoch die beiden Motoren 13 und 3 steuerungstechnisch so verbunden, dass beim Schwenken der Tragarme 2.1 bzw. 2.2 der Motor 13 entgegen dem Uhrzeigersinn, gleichzeitig aber der Motor 3 im Uhrzeigersinn dreht, wozu entsprechende Steuerungselemente vorgesehen sind.

Als Letztes wird nochmals der Motor 3 in Tätigkeit und zwar entgegen dem Uhrzeigersinn versetzt, bis die Plattform 1 auf einer Bodenoberfläche 24 aufsitzt.

In der Nähe des Bedienpaneels ist eine ebenfalls nicht näher gezeigte Steuerung vorgesehen, welche das System kontrolliert. Stellt die Steuerung eine Störung im System, einen Ausfall der Elektrik, eine Überladung der Plattform 1 od. dgl, fest, sendet sie ein entsprechendes, für den Nutzer erkennbares Signal, so dass dieser reagieren kann. Sind Elemente auf der Drehachse A oder der Schwenkachse S betroffen, so kann der Nutzer vor Ort handeln, indem er die Tragarme 2.1 und/oder 2.2 von der Ausgangswelle 7.1 bzw. 7.2 und der Getriebewelle 17.1 bzw. 17.2 sowie die entsprechenden Befestigungsmittel zwischen dem Rohr 4, den Rohrabschnitten 8.1 und 8.2 und/oder dem Gehäuse 10 und der Plattform 1 der Ladebordwand löst, die jeweils betroffenen Elemente von der Ausgangswelle 7.1 bzw. 7.2 bzw. von der Getriebewelle 17.1 bzw. 17.2 abnimmt und sie gegebenenfalls durch neue ersetzt, welche wiederum auf die Ausgangswelle 7.1 bzw. 7.2 bzw. die Getriebewelle 17.1 bzw. 17.2 aufgeschoben werden. Anschliessend können das Rohr 4, die Rohrabschnitte 8.1 und 8.2 und/oder das Gehäuse 10 wieder an der Plattform 1 befestigt und die Tragarme 2.1 und/oder 2.2 erneut auf die Ausgangswelle 7.1 bzw. 7.2 und die Getriebewelle 17.1 bzw. 17.2 aufgesteckt werden.

### Bezugszeichenliste

| | | | | | |
|---|---|---|---|---|---|
| 1 | Plattform | 34 | | 67 | |
| 2 | Tragarm | 35 | | 68 | |
| 3 | Motor | 36 | | 69 | |
| 4 | Rohr | 37 | | 70 | |
| 5 | Getriebe | 38 | | 71 | |
| 6 | Verbindung | 39 | | 72 | |
| 7 | Ausgangswelle | 40 | | 73 | |
| 8 | Rohrabschnitt | 41 | | 74 | |
| 9 | Ringkragen | 42 | | 75 | |
| 10 | Gehäuse | 43 | | 76 | |
| 11 | Hub- /Senkeinrichtung | 44 | | 77 | |
| 12 | Boden | 45 | | 78 | |
| 13 | Motor | 46 | | 79 | |
| 14 | Getriebe | 47 | | | |
| 15 | Verbindung | 48 | | | |
| 16 | Bremse | 49 | | | |
| 17 | Getriebewelle | 50 | | A | Drehachse |
| 18 | Ritzel | 51 | | | |
| 19 | Schalenzahnung | 52 | | S | Schwenkachse |
| 20 | Profil | 53 | | | |
| 21 | Profil | 54 | | | |
| 22 | LKW | 55 | | | |
| 23 | Verbindung | 56 | | | |
| 24 | Bodenoberfläche | 57 | | | |
| 25 | Kegelzahnrad | 58 | | | |
| 26 | Antriebsrad | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Ladebordwand, insbesondere für ein Fahrzeug, mit einer Plattform (1), welche über zumindest einen Tragarm (2.1, 2.2) mit einer Hub- /Senkeinrichtung (11) verbunden ist, wobei die Plattform (1) mit dem Tragarm (2.1, 2.2) eine Drehachse (A) und der Tragarm (2.1, 2.2) mit der Hub- /Senkeinrichtung (11) eine Schwenkachse (S) ausbildet,
**dadurch gekennzeichnet, dass** zum Antrieb der Ladebordwand ein
elektrischer Motor (3,13) auf der Drehachse (A) und/oder der Schwenkachse (S) angeordnet ist.

2. Ladebordwand nach Anspruch 1, **dadurch gekennzeichnet, dass** der Motor (3, 13) ein Servomotor bzw. Stellmotor ist.

3. Ladebordwand nach Anspruch 1 oder 2, **dadurch gekennzeichnet, dass** dem Motor (3, 13) zumindest ein Getriebe (5.1, 5.2; 14.1, 14.2) zugeordnet ist.

4. Ladebordwand nach Anspruch 4, **dadurch gekennzeichnet, dass** dem Motor (3, 13) und/oder dem Getriebe (5.1, 5.2; 14.1, 14.2) zumindest eine Bremse (16.1, 16.2) zugeordnet ist.

5. Ladebordwand nach Anspruch 3 oder 4, **dadurch gekennzeichnet, dass** das Getriebe (5.1, 5.2; 14.1, 14.2) selbsthemmend ist.

6. Ladebordwand nach wenigstens einem der Ansprüche 1 bis 5, **dadurch gekennzeichnet, dass** der Motor (13) für die Schwenkachse (S) in einem Gehäuse (10) sitzt.

7. Ladebordwand nach Anspruch 6, **dadurch gekennzeichnet, dass** beidseitig an das Gehäuse (10) je ein Tragarm (2.1, 2.2) angesetzt ist, und dass diese Tragarme um die Schwenkachse (S) drehbar sind.

8. Ladebordwand nach Anspruch 7, **dadurch gekennzeichnet, dass** der Tragarm (2.1, 2.2) mit einem Ringkragen (9.1, 9.2) in dem Gehäuse (10) sitzt.

9. Ladebordwand nach Anspruch 8, **dadurch gekennzeichnet, dass** zumindest ein Teil der Innenfläche des Ringkragens (9.1, 9.2) mit Zähnen (19) belegt ist, die mit einem Ritzel (18.1, 18.2) zusammenwirken, das auf der Getriebewelle (17.1, 17.2) aufgesetzt ist.

10. Ladebordwand nach Anspruch 9, **dadurch gekennzeichnet, dass** die Tragarme (2.1, 2.2) an der Getriebewelle (17.1, 17.2) lösbar angeordnet sind.

11. Ladebordwand nach wenigstens einem der Ansprüche 1 bis 10, **dadurch gekennzeichnet, dass** der Motor (3) für die Drehachse (A) in einem Rohr (4) sitzt.

12. Ladebordwand nach Anspruch 11, **dadurch gekennzeichnet, dass** das Rohr (4) sich zwischen den Tragarmen (2.1, 2.2) befindet.

13. Ladebordwand nach Anspruch 11 oder 12, **dadurch gekennzeichnet, dass** bevorzugt beidseitig des Motors (3) in dem Rohr (4) je ein Getriebe (5.1, 5.2) vorgesehen ist, wobei die Ausgangswellen (7.1, 7.2) dieser Getriebe mit der Plattform (1) drehfest verbunden sind.

14. Ladebordwand nach Anspruch 13, **dadurch gekennzeichnet, dass** die Tragarme (2.1, 2.2) lösbar mit den Ausgangswellen (7.1, 7.2) verbunden sind.

15. Ladebordwand nach wenigstens einem der Ansprüche 1 bis 14, **dadurch gekennzeichnet, dass** der Tragarm (2.1, 2.2) teleskopartig ausgebildet ist, wobei zwei Profile (20, 21) ineinander verschiebbar sind.

16. Ladebordwand nach Anspruch 15, **dadurch gekennzeichnet, dass** zumindest einem Profil (20) ein elektromotorisch betätigbarer Spindelantrieb zugeordnet ist.

17. Ladebordwand nach wenigstens einem der Ansprüche 3 bis 16, **dadurch gekennzeichnet, dass** das Getriebe (5.1, 5.2, 14.1, 14.2) über eine entsprechende Verbindung (6.1, 6.2, 15.1, 15.2) mit dem Motor (3, 13) verbunden ist.

18. Ladebordwand nach Anspruch 12, **dadurch gekennzeichnet, dass** an der Verbindung (6.1, 6.2, 15.1, 15.2) ein manuell antreibbares Kegelzahnrad (25) vorgesehen ist.

19. Ladebordwand nach wenigstens einem der Ansprüche 1 bis 18, **dadurch gekennzeichnet, dass** dem Motor (3, 13) und/oder dem Getriebe (5.1, 5.2, 14.1, 14.2) eine Steuerung zugeordnet ist.

## Claims

1. A tail lift, in particular for a vehicle, with a platform (1), which is connected to a lifting and lowering device (11) by way of at least one support arm (2.1, 2.2), wherein the platform (1) forms a rotation axis (A) with the support arm (2.1, 2.2) and the support arm (2.1, 2.2) forms a pivot axis (S) with the lifting and lowering device (11), **characterized in that**, in order to drive the tail lift, an electric motor (3, 13) is arranged on the rotation axis (A) and/or on the pivot axis (S).

2. A tail lift according to Claim 1, **characterized in that** the motor (3, 13) is a servo motor or a control motor.

3. A tail lift according to Claim 1 or 2, **characterized in that** at least one gear mechanism (5.1, 5.2; 14.1, 14.2) is associated with the motor (3, 13).

4. A tail lift according to Claim 4 [*sic*], **characterized in that** at least one brake (16.1, 16.2) is associated with the motor (3, 13) and/or the gear mechanism (5.1, 5.2; 14.1, 14.2).

5. A tail lift according to Claim 3 or 4, **characterized in that** the gear mechanism (5.1, 5.2; 14.1, 14.2) is self-locking.

6. A tail lift according to at least one of Claims 1 to 5, **characterized in that** the motor (13) for the pivot axis (S) is mounted in a housing (10).

7. A tail lift according to Claim 6, **characterized in that** one support arm (2.1, 2.2) in each case is attached to the housing (10) on both sides, and the said support arms are pivotable about the pivot axis (S).

8. A tail lift according to Claim 7, **characterized in that** the support arm (2.1, 2.2) is mounted with an annular collar (9.1, 9.2) in the housing (10).

9. A tail lift according to Claim 8, **characterized in that** at least part of the inner face of the annular collar (9.1, 9.2) is provided with teeth (19) which co-operate with a pinion (18.1, 18.2) which is mounted on the gear shaft (17.1, 17.2).

10. A tail lift according to Claim 9, **characterized in that** the support arms (2.1, 2.2) are arranged on the gear shaft (17.1, 17.2) in a detachable manner.

11. A tail lift according to at least one of Claims 1 to 10, **characterized in that** the motor (3) for the rotation axis (A) is arranged in a tube (4).

12. A tail lift according to Claim 11, **characterized in that** the tube (4) is situated between the support arms (2.1, 2.2).

13. A tail lift according to Claim 11 or 12, **characterized in that** one gear mechanism (5.1, 5.2) in each case is preferably provided on both sides of the motor (3) in the tube (4), wherein the output shafts (7.1, 7.2) of the said gear mechanisms are connected to the platform (1) in a rotationally fixed manner.

14. A tail lift according to Claim 13, **characterized in that** the support arms (2.1, 2.2) are connected to the output shafts (7.1, 7.2) in a detachable manner.

15. A tail lift according to at least one of Claims 1 to 14, **characterized in that** the support arm (2.1, 2.2) is designed in the manner of a telescope, wherein two profiles (20, 21) are displaceable one into the other.

16. A tail lift according to Claim 15, **characterized in that** a spindle drive capable of being actuated by an electric motor is associated with at least one profile (20).

17. A tail lift according to at least one of Claims 3 to 16, **characterized in that** the gear mechanism (5.1, 5.2, 14.1, 14.2) is connected to the motor (3, 13) by way of a corresponding linkage (6.1, 6.2, 15.1, 15.2).

18. A tail lift according to Claim 12, **characterized in that** a bevel gear (25) capable of being driven manually is provided on the linkage (6.1, 6.2, 15.1, 15.2).

19. A tail lift according to at least one of Claims 1 to 18, **characterized in that** a control device is associated with the motor (3, 13) and/or the gear mechanism (5.1, 5.2, 14.1, 14.2).

## Revendications

1. Paroi d'un bord de chargement, en particulier pour un véhicule, avec une plate-forme (1) reliée par l'intermédiaire d'au moins un bras de support (2.1, 2.2) à un dispositif de levage/descente (11), la plate-forme (1) constituant avec le bras de support (2.1, 2.2) un axe de rotation (A) et le bras de support (2.1, 2.2) constituant avec le dispositif de levage/descente (11) un axe de pivotement (S),
**caractérisée par le fait qu'**un moteur électrique (3, 13) est disposé sur l'axe de rotation (A) et/ou l'axe de pivotement (S) pour l'entraînement de la paroi d'un bord de chargement.

2. Paroi d'un bord de chargement selon la revendication 1, **caractérisée par le fait que** le moteur (3, 13) est un servomoteur ou un servodyne.

3. Paroi d'un bord de chargement selon la revendication 1 ou 2, **caractérisée par le fait qu'**au moteur (3, 13) est associé au moins un engrenage (5.1, 5.2 ; 14.1, 14.2).

4. Paroi d'un bord de chargement selon la revendication 3, **caractérisée par le fait qu'**au moteur (3, 13) et/ou à l'engrenage est associé au moins un frein (16.1, 16.2).

5. Paroi d'un bord de chargement selon la revendication 3 ou 4, **caractérisée par le fait que** l'engrenage (5.1, 5.2 ; 14.1, 14.2) est auto-freinant.

6. Paroi d'un bord de chargement selon au moins l'une des revendications 1 à 5, **caractérisée par le fait que** le moteur (13) pour l'axe de pivotement (S) se trouve dans un boîtier (10).

7. Paroi d'un bord de chargement selon la revendication 6, **caractérisée par le fait que** de part et d'autre du boîtier (10) est placé un bras de support (2.1, 2.2) et que ces bras de support peuvent tourner autour de l'axe de pivotement (S).

8. Paroi d'un bord de chargement selon la revendication 7, **caractérisée par le fait que** le bras de support (2.1, 2.2) se trouve avec une collerette annulaire (9.1, 9.2) dans le boîtier (10).

9. Paroi d'un bord de chargement selon la revendication 8, **caractérisée par le fait qu'**au moins une partie de la face intérieure de la collerette annulaire (9.1, 9.2) est pourvue de dents (19) qui coopèrent avec un pignon (18.1, 18.2) placé sur l'arbre d'engrenage (17.1, 17.2).

10. Paroi d'un bord de chargement selon la revendication 9, **caractérisée par le fait que** les bras de support (2.1, 2.2) sont disposés de manière amovible sur l'arbre d'engrenage (17.1, 17.2).

11. Paroi d'un bord de chargement selon au moins l'une des revendications 1 à 10, **caractérisée par le fait que** le moteur (3) pour l'axe de rotation (A) se trouve dans un tube (4).

12. Paroi d'un bord de chargement selon la revendication 11, **caractérisée par le fait que** le tube (4) se trouve entre les bras de support (2.1, 2.2).

13. Paroi d'un bord de chargement selon la revendication 11 ou 12, **caractérisée par le fait qu'**il est, de préférence, prévu de part et d'autre du moteur (3), dans le tube (4), un engrenage (5.1, 5.2), les arbres de sortie (7.1, 7.2) de ces engrenages étant reliés de manière immobile en rotation à la plate-forme (1).

14. Paroi d'un bord de chargement selon la revendication 13, **caractérisée par le fait que** les bras de support (2.1, 2.2) sont connectés de manière amovible aux arbres de sortie (7.1, 7.2).

15. Paroi d'un bord de chargement selon au moins l'une des revendications 1 à 14, **caractérisée par le fait que** le bras de support (2.1, 2.2) est réalisé de manière téléscopique, deux profilés (20, 21) pouvant se déplacer l'un dans l'autre.

16. Paroi d'un bord de chargement selon la revendication 15, **caractérisée par le fait qu'**à au moins un profilé (20) est associé un entraînement de broche pouvant être actionné par un moteur électrique.

17. Paroi d'un bord de chargement selon au moins l'une des revendications 3 à 16, **caractérisée par le fait que** l'engrenage (5.1, 5.2 ; 14.1, 14.2) est relié au moteur (3, 13) par l'intermédiaire d'une connexion appropriée (6.1, 6.2, 15.1, 15.2).

18. Paroi d'un bord de chargement selon la revendication 15, **caractérisée par le fait qu'**il est prévu une roue dentée conique (25) pouvant être entraînée manuellement.

19. Paroi d'un bord de chargement selon au moins l'une des revendications 3 à 16, **caractérisée par le fait qu'**au moteur (3, 13) et/ou à l'engrenage (5.1, 5.2 ; 14.1, 14.2) est associée une commande.
